# EUROPÄISCHE PATENTSCHRIFT

(11) **EP 0 623 630 B1**
(45) Veröffentlichungstag und Bekanntmachung des Hinweises auf die Patenterteilung: **02.01.1997**
(21) Anmeldenummer: 94106624.3
(22) Anmeldetag: 28.04.1994
(51) Int. Cl.: C08F 2/32, C02F 1/56, D21H 17/34

(54) **Wasser-in-Öl-Polymeremulsionen, Verfahren zu ihrer Herstellung und ihre Verwendung**
Water-in-oil polymer emulsions, process for their preparation and their use
Emulsions de polymères eau dans l'huile, procédé de leur préparation et leur usage

(30) Priorität: 07.05.1993 DE 4315172
(43) Veröffentlichungstag der Anmeldung: 09.11.1994
(73) Patentinhaber: BASF Aktiengesellschaft, 67063 Ludwigshafen (DE)
(72) Erfinder: Schneider, Karl-Heinrich, Dr., D-67122 Altrip (DE); Moench, Dietmar, Dr., D-69469 Weinheim (DE); Hartmann, Heinrich, Dr., D-67117 Limburgerhof (DE); Gebhardt, Norbert, Dr., D-67434 Neustadt (DE)

(56) Entgegenhaltungen:
- EP-A- 0 000 424
- EP-A- 0 529 360

## Beschreibung

Die Erfindung betrifft Wasser-in-Öl-Polymeremulsionen von wasserlöslichen Polymerisaten, wobei die kontinuierliche Ölphase zu mindestens 50 Gew.-% aus einem Öl pflanzlicher oder tierischer Herkunft besteht, ein Verfahren zur Herstellung der Wasser-in-Öl-Polymeremulsionen durch Polymerisieren von wasserlöslichen monoethylenisch ungesättigten Monomeren in Form von Wasser-in-Öl-Emulsionen, wobei das Öl, das mindestens aus 50 Gew.-% pflanzlichen oder tierischen Ölen besteht, in Gegenwart von Radikale bildenden Initiatoren und gegebenenfalls Netzmitteln zu Teilchen mit einer mittleren Teilchengröße von 0,1 bis 20 µm und Verwendung der Wasser-in-Öl-Polymeremulsionen als Flockungsmittel für die Abwasserbehandlung oder als Entwässerungs- und Retentionsmittel zur Papierherstellung.

Aus der EP-B-0 045 720 sind u.a. Wasser-in-Öl-Emulsionen von Polymerisaten aus wasserlöslichen monoethylenisch ungesättigten kationischen Monomeren bekannt. Gemäß den Angaben in der Beschreibung können auch Öle tierischer und pflanzlicher Herkunft die Ölphase der Wasser-in-Öl-Polymeremulsion bilden, jedoch wird in allen Beispielen ein verzweigtes Paraffin als Ölphase verwendet.

Aus der DE-B-3 302 069 sind polymerisat- und tensidhaltige Präparate bekannt, die als Wasser-in-Öl-Polymeremulsion vorliegen und bei denen die Ölphase der Emulsion auch aus vegetabilen und tierischen Ölen, d.h. im wesentlichen Triglyceriden, bestehen kann. In den Beispielen dieser Veröffentlichung werden jedoch ausschließlich Kohlenwasserstoffe als Ölphase verwendet.

Aus der EP-B 0 208 217 sind umweltfreundliche Flockungsmittelorganosole bekannt, die als Ölphase biologisch abbaubare aliphatische Dicarbonsäureester, wie Bis(2-ethylhexyl)adipat enthalten. Produkte dieser Art werden in großtechnischen Synthesen wirtschaftlich und mit gleichbleibender Qualität hergestellt. Sie sind außerdem leicht biologisch abbaubar. Gemäß den Angaben in dieser Veröffentlichung ist die Verwendung von pflanzlichen oder tierischen Ölen als Ölphase von Wasser-in-Öl-Polymeremulsionen nachteilig, weil die Naturprodukte uneinheitlich sind und in ihrer Zusammensetzung schwanken, was sich auf die Qualität der Organosole und deren Verwendung als Flockungsmittel ungünstig auswirkt. Die Verwendung von Ölen pflanzlicher Herkunft als Ölphase bei der Herstellung von Wasser-in-Öl-Polymeremulsionen führt oft zu technischen Schwierigkeiten, weil die Wasser-in-Öl-Polymeremulsionen hohe Koagulatanteile aufweisen oder außerordentlich schlecht filtrierbar sind.

Aus der US-A-4 918 123 sind Wasser-in-Öl-Emulsionen von kationischen Copolymerisaten aus wasserlöslichen und wasserunlöslichen monoethylenisch ungesättigten Monomeren bekannt, die unter Verwendung eines Emulgatorgemisches aus einem polymeren Wasser-in-Öl-Emulgator und einem üblicherweise verwendeten niedrigmolekularen Wasser-in-Öl-Emulgator, wie Sorbitanmonooleat, hergestellt werden. Als Ölphase werden in dieser Veröffentlichung jedoch ausschließlich Kohlenwasserstoffe beschrieben.

Der polymere Emulgator, der zusammen mit Sorbitanmonooleat bei dem Verfahren der US-A-4 918 123 eingesetzt wird, ist aus der EP-A-0 000 424 bekannt. Es handelt sich hierbei um öllösliche, wasserunlösliche Blockcopolymerisate des Typs ABA von Polyester-Polyethylenoxid-Polyester, die beispielsweise durch Umsetzung von kondensierter 12-Hydroxystearinsäure mit Polyalkylenoxiden hergestellt werden. Die öllöslichen Blockcopolymerisate und ihre Mischungen mit niedrigmolekularen üblichen Wasser-in-Öl-Emulgatoren sind gemäß den Angaben in der genannten EP-Anmeldung von besonderem Interesse für das Emulgieren von Wasser in Kohlenwasserstoffölen.

Aus der EP-A-0 297 184 sind polymerisathaltige Wasser-in-öl-Emulsionen bekannt, bei denen die Polymerteilchen aus einem vernetzten Polymerisat bestehen und eine Teilchengröße von 3 µm oder weniger aufweisen. Nach Beispiel 1 dieser Veröffentlichung besteht die Ölphase der Emulsion aus Olivenöl. Um die wäßrige Phase in Olivenöl zu emulgieren, verwendet man eine Emulgatormischung aus Sorbitanmonooleat und dem aus der oben zitierten EP-A-0 000 424 bekannten Blockcopolymerisat. Die wäßrige Phase, die unter Verwendung der Emulgatormischung in die Ölphase einemulgiert wird, enthält jedoch immer einen Vernetzer, so daß vernetzte Copolymerisate entstehen. Die Copolymerisate sind wasserquellbar, jedoch nicht in Wasser löslich. Sie werden als Verdickungsmittel für den Kosmetik- und Agrarbereich verwendet.

Aus der EP-A-0 529 360 sind Wasser-in-Öl-Polymeremulsionen von wasserlöslichen oder wasserquellbaren Polymerisaten bekannt, wobei die Ölphase der Emulsion mindestens 50 Gew.-% aus einem Öl pflanzlicher oder tierischer Herkunft besteht und die als Wasser-in-Öl-Emulgator Verbindungen enthalten, die durch Umsetzung von
(A) C₁₀- bis C₂₂-Fettalkoholen mit Epichlorhydrin im Molverhältnis 1:0,5 bis 1:1,5 zu Glycidylethern,
(B) Reaktion der Glycidylether mit (1) gesättigten, 2 bis 6 OH-Gruppen enthaltenden C₂- bis C₆-Alkoholen oder (2) deren Monoether mit C₁- bis C₂₂-Fettalkoholen, im Molverhältnis Glycidylether zu (1) oder (2) von 1:0,5 bis 1:6 in Gegenwart von Säuren ode Basen und
(C) Alkoxilierung der Reaktionsprodukte gemäß (B) mit mindestens einm C₂- bis C₄-Alkylenoxid im Molverhältnis 1:1 bis 1:6
erhältlich sind, wobei gegebenenfalls 5 bis 95 Gew.-% der genannten Wasser-in-Öl-Emulgatoren durch andere Wasser-in-Öl-Emulgatoren ersetzt sein können. Die Wasser-in-Öl-Polymeremulsionen können gegebenenfalls noch ein Netzmittel enthalten, so daß sie beim Eintragen in Wasser selbstinvertierend sind. Die Wasser-in-Öl-Polymeremulsionen werden beispielsweise als Retentions- und Entwässerungsmittel bei der Herstellung von Papier, Pappe und Karton oder als Flockungs- und Entwässerungsmittel für Klärschlamm verwendet. Diese Emulsionen sedimentieren jedoch bei der Lagerung.

Der vorliegenden Erfindung liegt die Aufgabe zugrunde, sedimentationsstabile Wasser-in-Öl-Polymeremulsionen zur Verfügung zu stellen, deren Ölphase überwiegend biologisch abbaubar ist.

Die Aufgabe wird erfindungsgemäß mit Wasser-in-Öl-Polymeremulsionen gelöst, die in der kontinuierlichen Ölphase, die zumindestens 50 Gew.-% aus einem Öl pflanzlicher oder tierischer Herkunft besteht, wasserlösliche Polymerisate mit einer mittleren Teilchengröße von 0,1 bis 20 µm mit Hilfe von 0,5 bis 15 Gew.-%, bezogen auf die gesamte Emulsion, einer Emulgatormischung aus
(a) 5 bis 95 Gew.-% eines Block- oder Pfropfcopolymeren der allgemeinen Formel (A-COO)ₘ-B, in der A ein hydrophobes Polymer mit einer Molmassen von > 500 g/mol auf Basis einer Polyhydroxycarbonsäure ist, B ein bifunktionelles hydrophiles Polymer mit einer Molmasse von > 500 g/mol auf Basis eines Polyalkylenoxids ist und m mindestens 2 ist und
(b) 5 bis 95 Gew.-% eines anderen Wasser-in-Öl-Emulgators mit einer Molmasse < 1000 g/mol
emulgiert und gegebenenfalls bis zu 10 Gew.-%, bezogen auf die gesamte Emulsion, eines Netzmittels mit einem HLB-Wert von mehr als 10 enthalten.

Diese Wasser-in-Öl-Polymeremulsionen werden dadurch hergestellt, daß man wasserlösliche monoethylenisch ungesättigte Monomere und Wasser mit einer Emulgatormischung aus
(a) 5 bis 95 Gew.-% eines Block- oder Pfropfcopolymeren der allgemeinen Formel (A-COO)ₘ-B, in der A ein hydrophobes Polymer mit einer Molmassen von > 500 g/mol auf Basis einer Polyhydroxycarbonsäure ist, B ein bifunktionelles hydrophiles Polymer mit einer Molmasse von > 500 g/mol auf Basis eines Polyalkylenoxids ist und m mindestens 2 ist und
(b) 5 bis 95 Gew.-% eines anderen Wasser-in-Öl-Emulgators mit einer Molmasse < 1000 g/mol
in einem Öl emulgiert, das zumindestens 50 Gew.-% pflanzlicher oder tierischer Herkunft ist, die Monomeren der Emulsion in Gegenwart von Radikale bildenden Initiatoren und gegebenenfalls Netzmitteln mit einem HLB-Wert von mehr als 10 zu Teilchen mit einer mittleren Teilchengröße von 0,1 bis 20 µm polymerisiert oder gegebenenfalls die genannnten Netzmittel nach Abschluß der Polymerisation zur Wasser-in-Öl-Polymeremulsion zufügt.

Die so erhältlichen Wasser-in-Öl-Polymeremulsionen werden als Flockungsmittel für die Abwasserbehandlung und Klärschlammentwässerung oder als Entwässerungs- und Retentionsmittel bei der Papierherstellung verwendet.

Die Ölphase der Wasser-in-Öl-Polymeremulsionen besteht zu mindestens 50, vorzugsweise zu 100 % aus einem Öl pflanzlicher oder tierischer Herkunft. Bei diesen Ölen kann es sich um denaturierte bzw. raffinierte Produkte handeln. Hauptbestandteile der natürlichen Öle sind in erster Linie Triglyceride, deren Carbonsäureanteil sich von ein- oder mehrfach ethylenisch ungesättigten sowie von gesättigten C₁₀- bis C₃₀-Fettsäuren ableitet. Geeignete pflanzliche Öle sind beispielsweise Olivenöl, Safloröl, Sojaöl, Erdnußöl, Cottonöl, Rapsöl, Sonnenblumenöl, Kaffeeöl, Leinöl und deren Gemische. Als tierische Öle kommen Fischöle in Betracht, z.B. Sardinenöl, Heringsöl, Lachsöl, Haifischleberöl und Walfischtran. Außer den Fischölen kommen als Ölphase Talgöl, Knochenöl und Schmalzöl in Betracht. Sowohl die reinen Öle als auch Mischungen beliebiger Öle können die Ölphase der Wasser-in-Öl-Polymeremulsionen bilden. Bevorzugte Öle sind Sonnenblumenöl, Rapsöl, Sojaöl und Talgöl.

Die natürlichen Öle können jedoch mit allen beliebigen bisher für die Herstellung von Wasser-in-Öl-Polymeremulsion verwendeten mit Wasser praktisch nicht mischbaren Flüssigkeiten eingesetzt werden. Als Mischungskomponenten für die in der Natur vorkommenden Öle kommen hauptsächlich solche mit Wasser praktisch nicht mischbaren Flüssigkeiten in Betracht, die biologisch abbaubar sind, z.B. die in der DE-B-3 524 950 genannten aliphatischen Dicarbonsäureester. Um die Viskosität der Wasser-in-Öl-Polymeremulsionen zu erniedrigen, kann es von Vorteil sein, wenn die Ölphase bis zu 15 Gew.-% eines üblicherweise verwendeten Kohlenwasserstoffs enthält, z.B. Hexan, Cyclohexan, Heptan, n-Octan oder Isooctan. Die Ölphase besteht jedoch vorzugsweise aus einem pflanzlichen oder tierischen Öl bzw. einer Mischung solcher Öle. Die Einsatzmenge der Öle, bezogen auf die Gesamtemulsion, beträgt 20 bis 70, vorzugsweise 30 bis 60 Gew.-%.

Die Wasser-in-Öl-Polymeremulsionen enthalten feinverteilte wasserlösliche Polymerisate. Die Polymerisate werden dadurch hergestellt, daß man wasserlösliche monoethylenisch ungesättigte Monomere in der wäßrigen Phase einer Wasser-in-Öl-Emulsion in Gegenwart von Emulgatoren und gegebenenfalls Netzmitteln und üblichen Polymerisationsinitiatoren polymerisiert. Die wasserlöslichen monoethylenisch ungesättigten Monomeren können gegebenenfalls zusammen mit wasserunlöslichen monoethylenisch ungesättigten Monomeren wie z.B. Vinylacetat copolymerisiert werden, wobei die wasserunlöslichen Monomeren in aller Regel nur in einer solchen Menge eingesetzt werden, daß noch wasserlösliche Polymerisate entstehen.

Zur näheren Erläuterung seien im folgenden lediglich beispielhaft wasserlösliche monoethylenisch ungesättigte Verbindungen genannt, und zwar monoethylenisch ungesättigte Carbonsäuren, wie Acrylsäure, Methacrylsäure, Maleinsäure, Itaconsäure, Salze der genannten Carbonsäuren, z.B. die Natrium-, Kalium- oder Ammoniumsalze, Acrylsäure- und Methacrylsäureester von Aminoalkoholen, wie beispielsweise Dimethylaminoethylacrylat in protonierter oder quaternisierter Form, z.B. Dimethylaminoethylacrylat-Hydrochlorid, Dimethylaminoethylacrylat-Hydrosulfat, Dimethylaminoethylacrylat-Methochlorid, Dimethylaminoethylacrylat-Methosulfat, Dimethylaminoethylmethacrylat-Hydrochlorid, Dimethylaminoethylmethacrylat-Hydrosulfat, Dimethylaminoethylmethacrylat-Methochlorid, Dimethylaminoethylmethacrylat-Methosulfat, Acrylamid, Methacrylamid, N-alkylierte (Meth)acrylamide, Methacrylamidopropyltrimethylammoniumchlorid, Acrylamidopropyltrimethylammoniumchlorid, Methacrylamidopropyltrimethylammoniummethylsulfat, Acrylamidopropyltrimethylammoniummethylsulfat, Acrylamido- und Methacrylamidoalkylsulfonsäuren und ihre Salze, wie 2-Acrylamido-2-methyl-propansulfonsäure, Hydroxyalkylacrylate und Hydroxyalkylmethacrylate, Vinylsulfonsäure, Vinylphosphonsäure, N-Vinylamide, wie beispielsweise N-Vinylformamid, N-Vinylacetamid, N-Vinyl-N-methylacetamid und N-Vinyl-N-methylformamid, Diallyldimethylammoniumchlorid, N-Vinylpyrrolidon, N-Vinylimidazol, N-Vinylimidazolin, 2-Methyl-1-vinylimidazolin, 2-Sulfoethylmethacrylat, Styrolphosphonsäure und Styrolsulfonsäure.

Geeignete wasserlösliche Monomere sind außerdem N-Methylolacrylamid, N-Methylolmethacrylamid sowie die mit einwertigen C₁- bis C₄-Alkoholen partiell oder vollständig veretherten N-Methylol(meth)acrylamide. Die wasserlöslichen Monomeren können entweder allein oder in Mischung untereinander zu wasserlöslichen Polymerisaten polymerisiert werden. Sie sind in jedem beliebigen Verhältnis miteinander copolymerisierbar.

Die erfindungsgemäßen, sedimentationsstabilen Wasser-in-Öl-Polymeremulsionen enthalten eine Emulgatormischung aus
(a) 5 bis 95 Gew.-% eines Block- oder Pfropfcopolymeren der allgemeinen Formel (A-COO)ₘ-B, in der A ein hydrophobes Polymer mit einer Molmassen von > 500 g/mol auf Basis einer Polyhydroxycarbonsäure ist, B ein bifunktionelles hydrophiles Polymer mit einer Molmasse von > 500 g/mol auf Basis eines Polyalkylenoxids ist und m mindestens 2 ist und
(b) 5 bis 95 Gew.-% eines anderen Wasser-in-Öl-Emulgators mit einer Molmasse < 1000 g/mol.

Die öllöslichen Wasser-in-Öl-Emulgatoren der Komponente (a) sind aus der EP-A-0 000 424 bekannt. Vorzugsweise kommen als Emulgator der Komponente (a) Blockcopolymerisate des Typs ABA in Betracht, deren Block A aus kondensierter 12-Hydroxystearinsäure und deren Block B aus Polyethylenoxid mit einem Molgewicht von mehr als 500 g pro Mol besteht. Das Molgewicht des Blocks A beträgt ebenfalls mehr als 500 g/mol. Blockcopolymerisate dieser Art sind im Handel unter der Bezeichnung Hypermer B246 und Hypermer B261 erhältlich. Sie haben HLB-Werte in dem Bereich von 5 bis 9. Die Emulgatormischungen enthalten vorzugsweise 10 bis 70 Gew.-% dieser Blockcopolymeren.

Als Komponente (b) der Emulgatormischungen kommen andere Wasserin-Öl-Emulgatoren in Betracht, die ein Molgewicht von weniger als 1000 g pro Mol aufweisen. Geeignete Wasser-in-Öl-Emulgatoren der Komponente (b) mit HLB-Werten von 2 bis 10, vorzugsweise 3 bis 7, sind beispielsweise Mono-, Di- und Polyglycerin-Fettsäureester, wie Monooleat, Dioleat, Monostearat, Distearat und Palmitat-Stearat. Diese Ester sind beispielsweise dadurch erhältlich, daß man Mono-, Di- und Polyglycerine oder Mischungen der genannten mehrwertigen Alkohole mit langkettigen Fettsäuren verestert, z.B. mit Ölsäure, Stearinsäure oder Palmitinsäure. Außerdem eignen sich als Wasser-in-Öl-Emulgatoren Sorbitan-Fettsäureester, wie Sorbitanmonooleat, Sorbitandioleat, Sorbitantrioleat, Sorbitanmonostearat und Sorbitantristearat. Andere geeignete Wasser-in-Öl-Emulgatoren sind Mannit-Fettsäureester, wie Mannit-Monolaurat oder Mannit-Monopalmitat, Pentaerythrit-Fettsäureester, wie Pentaerythrit-Monomyristat, Pentaerythrit-Monopalmitat, Pentaerythritdipalmitat, Polyethylenglykol-Sorbitan-Fettsäureester, insbesondere die Monooleate, Polyethylenglykol-Mannit-Fettsäureester, insbesondere Monooleate und Trioleate, Glucose-Fettsäureester, wie Glucose-Monooleat und Glucose-Monostearat, Trimethylolpropandistearat, Reaktionsprodukte von Isopropylamid mit Ölsäure, Glycerin-Sorbitanfettsäureester, ethoxylierte Alkylamine, Hexadecyl-Natriumphthalat und Decylnatriumphthalat. Die Emulgatormischung ist in einer Menge von 0,5 bis 15, vorzugsweise 1 bis 10 Gew.-% in der erfindungsgemäßen Wasser-in-Öl-Polymeremulsion enthalten. Die Emulgatoren der Gruppe (b) sind vorzugsweise zu 90 bis 30 Gew.-% in der Emulgatormischung enthalten.

Die Wasser-in-Öl-Polymeremulsionen können ferner gegebenenfalls bis zu 10 Gew.-%, bezogen auf die gesamte Emulsion, eines Netzmittels mit einem HLB-Wert von mehr als 10 enthalten (zur Definition des HLB-Wertes vgl. W.C. Griffin, Journal of Society of Cosmetic Chemist, Band 1, 311 (1950). Geeignete Netzmittel mit einem HLB-Wert über 10 sind beispielsweise ethoxylierte Alkylphenole, Dialkylester von Natriumsulfosuccinaten, bei der die Alkylgruppe mindestens 3 Kohlenstoffatome hat. Seifen, die sich von Fettsäuren mit 10 bis 22 Kohlenstoffatomen ableiten, Alkalisalze von Alkyl- oder Alkenylsulfaten mit 10 bis 26 Kohlenstoffatomen. Außerdem eignen sich ethoxylierte Fettalkohole und ethoxylierte Amine. Wenn man die Netzmittel bereits bei der Polymerisation einsetzt, erhält man besonders feinteilige Wasser-in-Öl-Polymeremulsionen.

Die Polymerisation der Monomeren wird in Gegenwart der üblichen Polymerisationsinitiatoren durchgeführt. Zum Einsatz kommen können wasserlösliche Verbindungen wie Kaliumperoxodisulfat, 2,2'-Azobis(2-amidinopropan)dihydrochlorid, 4,4'-Azobis(4-cyanopentansäure) oder Redoxsysteme wie z.B. Ammoniumpersulfat/Ferrosulfat. Bevorzugt verwendet man öllösliche Initiatoren wie z.B. Peroxide (Dibenzoylperoxid, Dilaurylperoxid, tert.-Butylperpivalat) oder Azoverbindungen (Azobis(isobutyronitril), Dimethyl-2,2'-Azobis(isobutyrat), 2,2'-Azobis(4-methoxi-2,4-dimethylvaleronitril).

Die Polymerisationstemperatur hängt von der Zerfallskinetik des verwendeten Initiators ab und kann im Bereich von 5 bis 100°C liegen. Zur Absenkung des Gehaltes an Restmonomeren ist es auch möglich, zunächst mit einem Starter zu beginnen und die Polymerisation dann mit einem zweiten Initiator gegebenenfalls bei höherer Temperatur zu beenden. Die Einsatzmengen der Initiatoren betragen in der Regel 0,01 bis 1, vorzugsweise 0,02 bis 0,5 Gew.-%, bezogen auf die Monomeren.

Die Wasser-in-Öl-Polymeremulsionen werden hergestellt, indem man wasserlösliche monoethylenisch ungesättigte Monomere und Wasser mit einer Emulgatormischung aus den Komponenten (a) und (b) in einem Öl emulgiert, das zumindestens 50 Gew.-% pflanzlicher oder tierischer Herkunft ist, die Monomeren der Emulsion in Gegenwart von Radikale bildenden Initiatoren und gegebenenfalls Netzmitteln mit einem HLB-Wert von mehr als 10 zu Teilchen mit einer mittleren Teilchengröße von 0,1 bis 20 µm polymerisiert oder gegebenenfalls die genannten Netzmittel erst nach Abschluß der Polymerisation zur Wasser-in-Öl-Polymeremulsion zufügt. Die mittlere Teilchengröße der in den Emulsionen enthaltenen Polymeren beträgt vorzugsweise 1 bis 10 µm. Die erfindungsgemäßen Wasser-in-Öl-Polymeremulsionen, die ein Netzmittel enthalten, sind selbstinvertierend, d.h. beim Eingießen der Emulsion in Wasser tritt eine Phasenumkehr ein und das in der Emulsion vorhandene Polymerisat löst sich rasch in Wasser. Als Netzmittel für das Invertieren der Wasser-in-Öl-Polymeremulsionen verwendet man vorzugsweise ethoxilierte und/oder propoxilierte Fettalkohole mit 10 bis 22 Kohlenstoffatomen und einem Alkoxilierungsgrad von 5 bis 20.

Die oben beschriebenen Wasser-in-Öl-Polymeremulsionen weisen nur relativ geringe Gehalte an Koagulat auf, sind leicht filtrierbar und gut verarbeitbar. Die Polymerisate haben K-Werte nach Fikentscher von mindestens 100, vorzugsweise von 140 bis 300. Die Wasser-in-Öl-Polymeremulsionen werden als Flockungsmittel für die Abwasserbehandlung und Klärschlammentwässerung oder als Entwässerungs- und Retentionsmittel bei der Papierherstellung verwendet. Sie sind darüber hinaus als Flockungsmittel in der Trinkwasseraufbereitung, zur Entwässerung von mineralischen Suspensionen z.B. Baggerschlämmen und zur Abtrennung von Zellkulturen bei Fermentationsprozessen, als Verflüssiger bei der Aufschlämmung von Bohrgesteinen, z.B. bei der Erdölförderung, als Verdicker im Pigmentdruck sowie als Zementadditiv einsetzbar. Bei der Abwasserbehandlung und der Klärschlammentwässerung benötigt man 0,00005 bis 0,5 Gew.-% Copolymerisat, bezogen auf das zu behandelnde Medium. Bei der Anwendung als Retentions- und Entwässerungsmittel in der Papierherstellung betragen die Mengen an Polymer 0,01 bis 0,5 Gew.-%, bezogen auf trockenen Papierstoff.

Die in den Beispielen angegebenen Teile sind Gewichtsteile, die Angaben in Prozent beziehen sich, falls nicht anders angegeben, auf das Gewicht der Stoffe. Der K-Wert der Polymerisate wurde nach H. Fikentscher, Cellulose-Chemie, Band 13, 58-64 und 71-74 (1932) in 5 gew.-%iger Kochsalzlösung bei 25°C und einer Polymerkonzentration von 0,1 Gew.-% und pH 7 bestimmt.

Die Viskosität der Wasser-in-Öl-Polymeremulsionen wurde in einem Rotationsviskosimeter (Rotovisko RV20 der Firma Haake, Meßsystem MVDIN) bei einer Temperatur von 25°C und einem Schergefälle von 100 sec⁻¹ gemessen.

Nach Beendigung der Polymerisation wurde die Wasser-in-Öl-Polymeremulsion durch ein Perlonfilter der Maschenweite 0,4 mm filtriert. Das abfiltrierte Koagulat wurde anschließend mit Cyclohexan gewaschen, getrocknet und gewogen.

Als Komponente (a) des Emulgatorgemisches verwendete man ein Polyester-Polyethylenoxid-Polyester-Blockcopolymerisat mit einer Molmasse > 1000 g/mol, das durch Umsetzung von kondensierter 12-Hydroxystearinsäure mit Polyethylenoxid gemäß der Lehre der EP-A-0 000 424 hergestellt wird und im Handel unter der Bezeichnung Hypermer B 246 vertrieben wird. Dieser Emulgator wird im folgenden mit Emulgator 1 bezeichnet.

### Beispiel 1

In einem 2 l fassenden Kolben, der mit einem Rührer, Thermometer und einem Gaseinleitungsrohr versehen ist, gibt man

| | |
|---|---|
| 270 g | Rapsöl |
| 30 g | Emulgator 1 |
| 30 g | Sorbitanmonooleat |
| 380 g | 50 %ige wäßrige Acrylamidlösung |
| 0,1 g | 40 %ige wäßrige Diethylentriaminpentaessigsäure-Natrium-Lösung |

und rührt das Gemisch bei einer Drehzahl von 200 UpM unter Einleiten von Stickstoff 30 Min. bei einer Temperatur von 25°C. Anschließend fügt man 0,1 g Dimethyl-2,2'-azobisisobutyrat in 1 g Aceton gelöst hinzu und erhitzt das Reaktionsgemisch auf 55°C.

Während der Polymerisation wird die Badtemperatur so geregelt, daß die Temperatur der Reaktionsmischung konstant bleibt. Nach beendeter Polymerisation wurden 0,07 % Koagulat abfiltriert. Das Polymerisat hatte einen K-Wert von 240, die Viskosität der Emulsion betrug 1300 mPas.

### Beispiel 2

In einem 2 l fassenden Kolben, der mit einem Rührer, Thermometer und einem Gaseinleitungsrohr versehen ist, gibt man

| | |
|---|---|
| 300 g | Rapsöl |
| 30 g | Emulgator 1 |
| 30 g | Sorbitanmonooleat |

und rührt in das Gemisch eine Monomerlösung mit einem pH-Wert von 6,7 aus

| | |
|---|---|
| 250 g | 50 %ige wäßrige Acrylamidlösung |
| 53,2 g | 100 %ige Acrylsäure |
| 116 g | 25 %ige wäßrige Natronlauge |
| 0,1 g | 40 %ige wäßrige Diethylentriaminpentaessigsäure-Natriumsalz-Lösung |

bei einer Drehzahl von 200 UpM ein. Nach 30 Min. Rühren bei einer Temperatur von 25°C und Einleiten von Stickstoff fügt man 0,1 g Dimethyl-2,2'-azobisisobutyrat in 1 g Aceton gelöst hinzu und erhitzt das Reaktionsgemisch auf 55°C. Während der Polymerisation wird die Badtemperatur so geregelt, daß die Temperatur der Reaktionsmischung konstant bleibt. Nach beendeter Polymerisation wurde 0,01 % Koagulat abfiltriert. Das Polymerisat hatte einen K-Wert von 272, die Viskosität der Emulsion betrug 740 mPas.

### Beispiel 3

Beispiel 2 wurde mit den Ausnahmen wiederholt, daß als Ölphase

| | |
|---|---|
| 240 g | Sonnenblumenöl |
| 20 g | Emulgator 1 |
| 20 g | Sorbitanmonooleat |

und als Monomerlösung mit einem pH-Wert von 6,7

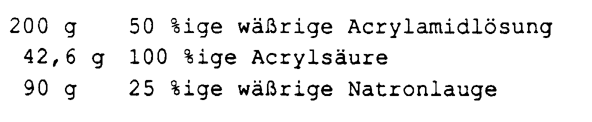

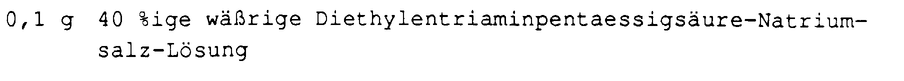

verwendet wurden. Das Polymerisat hatte einen K-Wert von 276, die Viskosität der Emulsion betrug 635 mPas. 0,07 % Koagulat wurden abfiltriert.

### Beispiel 4

Beispiel 3 wurde mit den Ausnahmen wiederholt, daß als Ölphase 240 g Sojaöl verwendet wurden. Das Polymerisat hatte einen K-Wert von 274, die Viskosität der Emulsion betrug 620 mPas. 0,01 % Koagulat wurden abfiltriert.

### Beispiel 5

In einem 2 l fassenden Kolben, der mit einem Rührer, Thermometer und einem Gaseinleitungsrohr versehen ist, gibt man

| | |
|---|---|
| 295 g | Rapsöl |
| 35 g | Emulgator 1 |
| 10 g | Sorbitanmonooleat |

und rührt in das Gemisch eine Monomerlösung mit einem pH-Wert von 6,7 (eingestellt mit 10 %iger wäßriger Salzsäure) aus

| | |
|---|---|
| 280 g | 50 %ige wäßrige Acrylamidlösung |
| 96 g | 80 %ige wäßrige Dimethylaminoethylacrylat-Methodchloridlösung |
| 0,1 g | 40 %ige wäßrige Diethylentriaminpentaessigsäure-Natriumsalz-Lösung |

bei einer Drehzahl von 200 UpM ein. Nach 30 Min. Rühren bei einer Temperatur von 25°C und Einleiten von Stickstoff fügt man 0,1 g Dimethyl-2,2'-azobisisobutyrat in 1 g Aceton gelöst hinzu und erhitzt das Reaktionsgemisch auf 55°C. Während der Polymerisation wird die Badtemperatur so geregelt, daß die Temperatur der Reaktionsmischung konstant bleibt. Nach beendeter Polymerisation wurden 2,8 % Koagulat abfiltriert. Das Polymerisat hatte einen K-Wert von 230, die Viskosität der Emulsion betrug 620 mPas.

### Beispiele 6 bis 21

Das Beispiel 5 wird jeweils mit den aus Tab. 1 ersichtlichen Änderungen reproduziert. Die dabei erhaltenen Ergebnisse sind ebenfalls in Tab. 1 aufgeführt.

**Tabelle 1**

| Beispiel | M₁/g | M₂/g | Öl/g | E₁/g | E₂/g | Koagulat [%] | K-Wert | Viskosität [mPas] |
|---|---|---|---|---|---|---|---|---|
| 6 | 280 | 96 | 295¹⁾ | 25 | 20 | 0,01 | 239 | 650 |
| 7 | 280 | 96 | 295¹⁾ | 15 | 30 | 0,08 | 255 | 600 |
| 8 | 280 | 96 | 250¹⁾ | 20 | 20 | 0,04 | 246 | 945 |
| 9 | 280 | 96 | 270¹⁾ | 20 | 20 | 0,12 | 251 | 810 |
| 10 | 280 | 96 | 270²⁾ | 20 | 20 | 0,52 | 236 | 780 |
| 11 | 280 | 96 | 270³⁾ | 20 | 20 | 0,50 | 239 | 750 |
| 12 | 280 | 96 | 270⁴⁾ | 20 | 20 | 0,30 | 235 | 630 |
| | | | | | | | | |
| 13 | 240 | 150 | 250¹⁾ | 15 | 30 | 0,33 | 252 | 1000 |
| 14 | 240 | 150 | 300¹⁾ | 15 | 30 | 0,48 | 245 | 650 |
| 15 | 240 | 150 | 285²⁾ | 25 | 25 | 0,2 | 194 | 866 |
| 16 | 240 | 150 | 285³⁾ | 25 | 25 | 0,17 | 236 | 770 |
| 17 | 240 | 150 | 285⁴⁾ | 25 | 25 | 2,2 | 228 | 695 |
| | | | | | | | | |
| 18 | 155 | 225 | 270¹⁾ | 20 | 20 | 2,4 | 226 | 770 |
| 19 | 155 | 225 | 270²⁾ | 20 | 20 | 0,02 | 238 | 873 |
| 20 | 155 | 225 | 270³⁾ | 20 | 20 | 0,03 | 240 | 700 |
| 21 | 155 | 225 | 270¹⁾ | 20 | 20 | 0,01 | 223 | 650 |

- M₁:: 50 %ige wäßrige Acrylamidlösung
- M₂:: 80 %ige wäßrige Dimethylaminoethylacrylat-Methochloridlösung
- E₁:: Emulgator 1
- E₂:: Sorbitanmonooleat
- 1): Rapsöl (Vollraffinat)
- 2): Sonnenblumenöl
- 3): Sojaöl (Vollraffinat)
- 4): Sojaöl (roh)

### Anwendungstechnische Beispiele

### A. Herstellung von Papier

Die Wasser-in-Öl-Emulsionen, die untersucht werden sollen, werden zunächst durch Verdünnen mit Trinkwasser in gebrauchsfertige Öl-in-Wasser-Emulsionen invertiert. Der Polymergehalt der invertierten Emulsionen beträgt 0,3 Gew.-%.

Zur Beschleunigung des Invertiervorganges werden in 100 g der Wasser-in-Öl-Emulsion 2,5 g eines Umsetzungsproduktes von 1 Mol Myristylalkohol mit 7 mol Ethylenoxid und 4 mol Propylenoxid sowie 2,5 g eines Umsetzungsproduktes von 1 Mol Myristylalkohol mit 2 mol Ethylenoxid und 4 mol Propylenoxid eingerührt.

Bestimmung der Entwässerungszeit: 1 l der zu prüfenden Papierstoffsuspension wird jeweils in einem Schopper-Riegler-Testgerät entwässert. Die Zeit, die für verschiedene Auslaufvolumina ermittelt wird, wird als Kriterium für die Entwässerungsgeschwindigkeit der jeweils untersuchten Stoffsuspension gewertet. Die Entwässerungszeiten wurden nach einem Durchlauf von 700 ml Wasser ermittelt.

Optische Durchlässigkeit des Siebwassers Sie wird mit Hilfe eines Photometers bei einer Wellenlänge von 590 nm bestimmt und ist ein Maß für die Retention von Fein- und Füllstoffen. Sie wird in Prozent angegeben. Je höher der Wert für die optische Durchlässigkeit ist, desto besser ist die Retention.

### Beispiele 22 bis 26

Um die Wirksamkeit einiger nach den oben beschriebenen Beispielen hergestellten Wasser-in-Öl-Polymeremulsionen als Entwässerungsmittel und als Retentionsmittel bei der Papierherstellung zu prüfen, wurde für diese Beispiele ein Stoffmodell gewählt, das durch Aufschlagen von 100 Teilen unbedrucktem Zeitungsdruckpapier und 10 Teilen Chinaclay hergestellt wurde. Dieses Stoffmodell hatte eine Dichte von 2 g/l und einen pH-Wert von 7. In Tabelle 2 sind die Ergebnisse zusammengestellt. Bei dem Vergleichsbeispiel 1 wurde das Stoffmodell durch Zugabe einer handelsüblichen Wasser-in-Öl-Emulsion von Polyacrylamid auf Basis einer Ölphase aus Mineralöl entwässert. Das Polymerisat der handelsüblichen Wasser-in-Öl-Emulsion ist ein Copolymer aus 65 Gew.-% Acrylamid und 35 Gew.-% Dimethylaminoethylacrylat-Methochlorid.

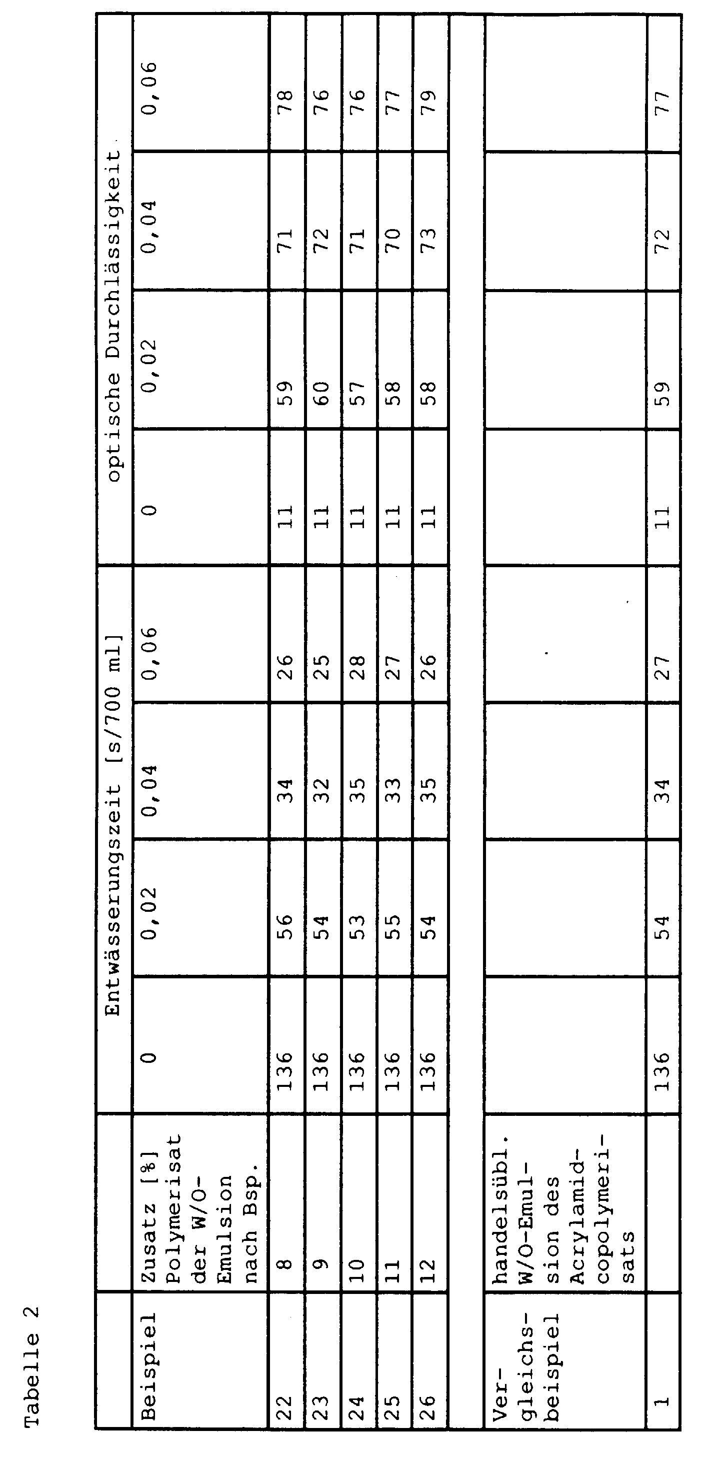

### Beispiele 27 bis 31

Für diese Beispiele verwendete man als Stoffmodell aufgeschlagenes Altpapier aus 33 Teilen Illustrierten, 33 Teilen Wellpappe und 34 Teilen alten Zeitungen. Die Stoffdichte betrug 2 g/l, der pH-Wert 7. In Tabelle 3 sind die Ergebnisse angegeben, die bei Einsatz von einigen erfindungsgemäßen Wasser-in-Öl-Polymeremulsionen als Entwässerungs- und Retentionsmittel erhalten werden. Als Vergleich diente die gleiche handelsübliche Wasser-in-Öl-Emulsion des Acrylamidcopolymerisats wie in Vergleichsbeispiel 1.

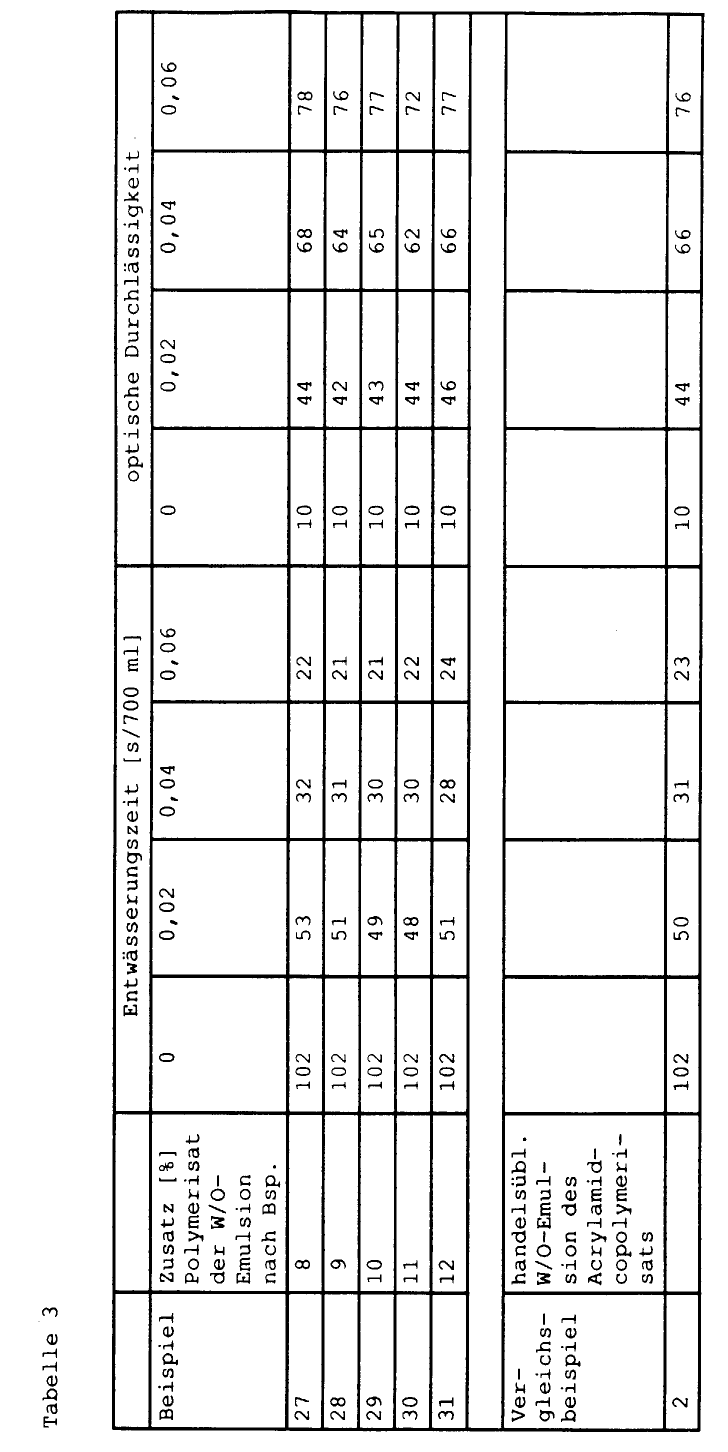

### B. Bestimmung der Wirksamkeit der Wasser-in-Öl-Polymeremulsionen als Flockungsmittel bei der Klärschlammentwässerung

Die Wasser-in-Öl-Polymeremulsionen, die untersucht werden sollen, werden zunächst durch Verdünnen mit Trinkwasser in gebrauchsfertige Öl-in-Wasser-Emulsionen invertiert. Der Polymergehalt der invertierten Emulsionen beträgt 0,1 %.

Zur Beschleunigung des Invertiervorganges werden in 100 g der Wasser-in-Öl-Emulsion 2,5 g eines Umsetzungsproduktes von 1 Mol Myristylalkohol mit 7 mol Ethylenoxid und 4 mol Propylenoxid sowie 2,5 g eines Umsetzungsproduktes von 1 Mol Myristylalkohol mit 2 mol Ethylenoxid und 4 mol Propylenoxid eingerührt.

Nach genau standardisierter Prozedur werden in einem Standzylinder durch Umschwenken verschiedene Konzentrationen der Gebrauchsemulsionen (im ppm bezogen auf die Schlammmenge) mit Klärschlamm vermischt. Der geflockte Schlamm wird visuell nach folgender Skala bewertet:
- Flockungszahl 1:: keine Veränderung der Schlammstruktur
- Flockungszahl 2:: erkennbare Flockung (Teilchenvergrößerung)
- Flockungszahl 3:: markante Flockung
- Flockungszahl 4:: große Flocken
- Flockungszahl 5:: Totalflockung (zusammenhängende Masse)

### Bestimmung der Entwässerbarkeit von Klärschlämmen durch Schwerkraftfiltration:

Nach genau standardisierter Prozedur wird in einem Standzylinder durch Umschwenken die optimale Konzentration der Gebrauchsemulsion (d.h. die niedrigste Konzentration, bei der die Flockungszahl 5 erreicht wird) mit Klärschlamm vermischt. Der geflockte Schlamm wird in einen Büchnertrichter geschüttet und durch ein Filtertuch filtriert. Nach 15, 30, 45 und 60 Sekunden wird das durchgelaufene Filtratvolumen gemessen.

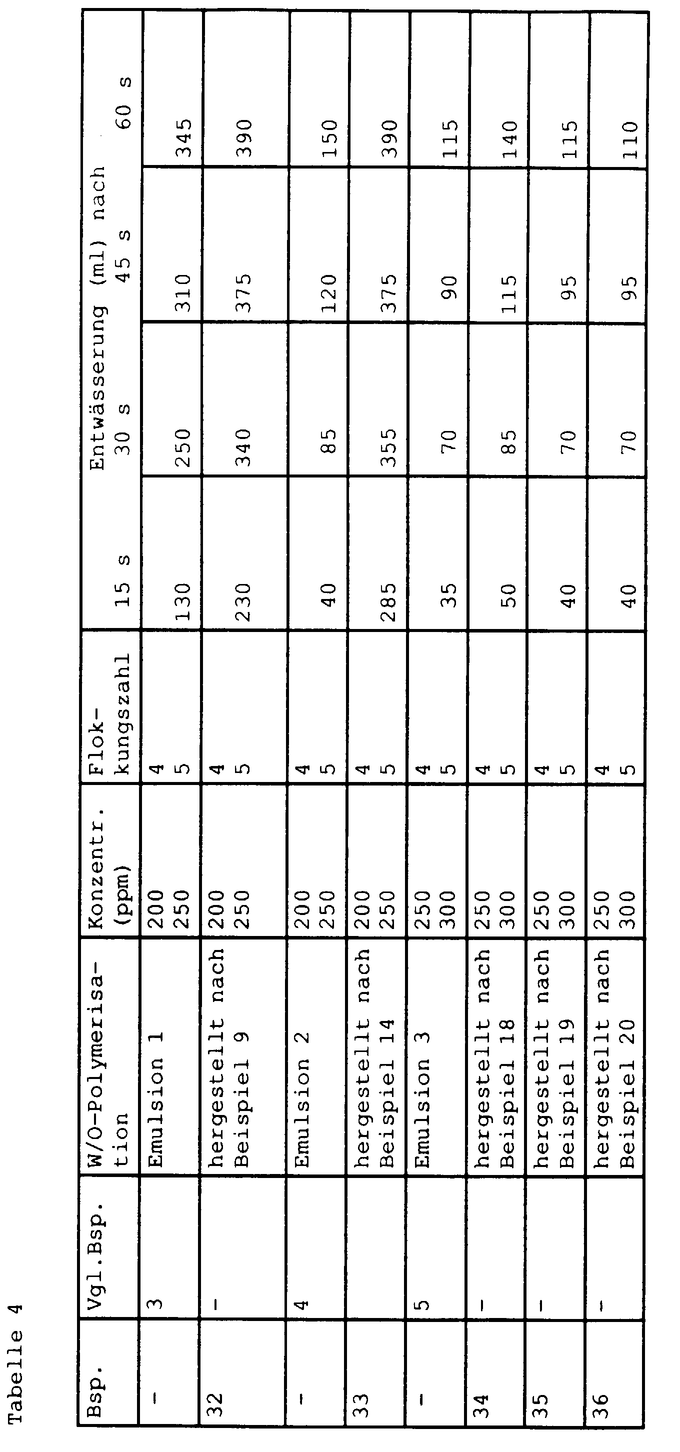

- Emulsion 1:: handelsübliche Wasser-in-Öl-Emulsion eines Copolymerisats aus Acrylamid und Dimethylaminoethylacry lat-Methosulfat im molaren Verhältnis 90/10
- Emulsion 2:: wie Emulsion 1, jedoch Copolymerisat im molaren Verhältnis 80/20
- Emulsion 3:: wie Emulsion 1, jedoch Copolymerisat im molaren Verhältnis 60/40

Wie Tabelle 4 entnommen werden kann, entsprechen die erfindungsgemäßen Wasser-in-Öl-Polymeremulsionen auf Basis von Pflanzenölen bezüglich der Flockungswirkung marktüblichen Wasser-in-Öl-Polymeremulsionen auf Mineralölbasis und übertreffen die handelsüblichen Emulsionen bei der Entwässerung von Klärschlämmen. Die Ölphase der erfindungsgemäßen Wasser-in-Öl-Emulsionen ist darüberhinaus biologisch abbaubar.

## Patentansprüche

1. Wasser-in-Öl-Polymeremulsionen, dadurch gekennzeichnet, daß sie in einer kontinuierlichen Ölphase, die zu mindestens 50 Gew.-% aus einem Öl pflanzlicher oder tierischer Herkunft besteht, wasserlösliche Polymerisate mit einer mittleren Teilchengröße von 0,1 bis 20 µm mit Hilfe von 0,5 bis 15 Gew.-%, bezogen auf die gesamte Emulsion, einer Emulgatormischung aus
(a) 5 bis 95 Gew.-% eines Block- oder Pfropfcopolymeren der allgemeinen Formel (A-COO)ₘ-B, in der A ein hydrophobes Polymer mit einer Molmasse von > 500 g/mol auf Basis einer Poly(hydroxycarbonsäure) ist, B ein bifunktionelles hydrophiles Polymer mit einer Molmasse von > 500 g/mol auf Basis eines Polyalkylenoxids ist und m mindestens 2 ist und
(b) 5 bis 95 Gew.-% eines anderen Wasser-in-Öl-Emulgators mit einer Molmasse < 1000 g/mol
emulgiert und gegebenenfalls bis zu 10 Gew.-%, bezogen auf die gesamte Emulsion, eines Netzmittels mit einem HLB-Wert von mehr als 10 enthalten.

2. Wasser-in-Öl-Polymeremulsionen nach Anspruch 1, dadurch gekennzeichnet, daß die Ölphase aus einem Öl pflanzlicher oder tierischer Herkunft besteht.

3. Verfahren zur Herstellung von Wasser-in-Öl-Polymeremulsionen nach Anspruch 1 oder 2, dadurch gekennzeichnet, daß man wasserlösliche monoethylenisch ungesättigte Monomere und Wasser mit einer Emulgatormischung aus
(a) 5 bis 95 Gew.-% eines Block- oder Pfropfcopolymeren der allgemeinen Formel (A-COO)ₘ-B, in der A ein hydrophobes Polymer mit einer Molmasse von > 500 g/mol auf Basis einer Poly(hydroxycarbonsäure) ist, B ein bifunktionelles hydrophiles Polymer mit einer Molmasse von > 500 g/mol auf Basis eines Polyalkylenoxids ist und m mindestens 2 ist und
(b) 5 bis 95 Gew.-% eines anderen Wasser-in-Öl-Emulgators mit einer Molmasse < 1000 g/mol
in einem Öl emulgiert, das zu mindestens 50 Gew.-% pflanzlicher oder tierischer Herkunft ist, die Monomeren der Emulsion in Gegenwart von Radikale bildenden Initiatoren und gegebenenfalls Netzmitteln mit einem HLB-Wert von mehr als 10 zu Teilchen mit einer mittleren Teilchengröße von 0,1 bis 20 µm polymerisiert oder gegebenenfalls die genannten Netzmittel nach Abschluß der Polymerisation zur Wasser-in-Öl-Polymeremulsion zufügt.

4. Verwendung der Wasser-in-Öl-Polymeremulsionen nach Anspruch 1 oder 2 als Flockungsmittel für die Abwasserbehandlung und Klärschlammentwässerung.

5. Verwendung der Wasser-in-Öl-Polymeremulsionen nach Anspruch 1 oder 2 als Entwässerungs- und Retentionsmittel bei der Papierherstellung.

## Claims

1. A water-in-oil polymer emulsion which contains water-soluble polymers having a mean particle size of from 0.1 to 20 µm emulsified in a continuous oil phase, at least 50% by weight of which consists of an oil of vegetable or animal origin, with the aid of from 0.5 to 15% by weight, based on the total emulsion, of an emulsifier mixture comprising
(a) from 5 to 95% by weight of a block or graft copolymer of the formula (A-COO)ₘ-B, where A is a hydrophobic polymer having a molecular weight of > 500 g/mol and based on a polyhydroxycarboxylic acid, B is a bifunctional hydrophilic polymer having a molecular weight of > 500 g/mol and based on a polyalkylene oxide and m is at least 2, and
(b) from 5 to 95% by weight of another water-in-oil emulsifier having a molecular weight of < 1000 g/mol,
and may contain up to 10% by weight, based on the total emulsion, of a wetting agent having an HLB value of more than 10.

2. A water-in-oil polymer emulsion as claimed in claim 1, wherein the oil phase consists of an oil of vegetable or animal origin.

3. A process for the preparation of a water-in-oil polymer emulsion as claimed in claim 1 or 2, wherein water-soluble monoethylenically unsaturated monomers and water are emulsified with an emulsifier mixture comprising
(a) from 5 to 95% by weight of a block or graft copolymer of the formula (A-COO)ₘ-B, where A is a hydrophobic polymer having a molecular weight of > 500 g/mol and based on a polyhydroxycarboxylic acid, B is a bifunctional hydrophilic polymer having a molecular weight of > 500 g/mol and based on a polyalkylene oxide and m is at least 2, and
(b) from 5 to 95% by weight of another water-in-oil emulsifier having a molecular weight of < 1000 g/mol,
in an oil, at least 50% by weight of which is of vegetable or animal origin, and the monomers of the emulsion are polymerized in the presence of free radical initiators and in the presence or absence of wetting agents having an HLB value of more than 10 to give particles having a mean particle size of from 0.1 to 20 µm or, if required, the stated wetting agents are added to the water-in-oil polymer emulsion after completion of the polymerization.

4. Use of a water-in-oil polymer emulsion as claimed in claim 1 or 2 as a flocculant for wastewater treatment and sewage sludge dewatering.

5. Use of a water-in-oil polymer emulsion as claimed in claim 1 or 2 as a drainage or retention aid in papermaking.

## Revendications

1. Emulsions de polymères du type eau dans l'huile, caractérisées en ce qu'on émulsionne dans une phase huileuse continue, qui est constituée d'au moins 50% en poids d'une huile d'origine végétale ou animale, des polymères solubles dans l'eau dont la taille moyenne de particules est de 0,1 à 20 µm, à l'aide de 0,5 à 15% en poids, par rapport à l'émulsion totale, d'un mélange d'émulsifiants constitué de
(a) 5 à 95% en poids d'un copolymère en bloc ou greffé de formule générale (A-COO)ₘ-B, dans laquelle A est un polymère hydrophobe de masse molaire supérieure à 500 g/mole à base de poly(hydroxyacide carboxylique), B est un polymère hydrophile bifonctionnel de masse molaire supérieure à 500 g/mole à base d'un polyoxyde d'alkylène et m vaut au moins 2 et
(b) 5 à 95% en poids d'un autre émulsifiant du type eau dans huile de masse moléculaire inférieure à 1000 g/mole
et qu'elles contiennent éventuellement jusqu'à 10% en poids, par rapport à l'émulsion totale, d'un mouillant ayant une valeur de HLB supérieure à 10.

2. Emulsions de polymères du type eau dans huile selon la revendication 1, caractérisées en ce que la phase huileuse est constituée d'une huile d'origine végétale ou animale.

3. Procédé de fabrication d'émulsions de polymères du type eau dans huile selon la revendication 1 ou 2, caractérisé en ce qu'on émulsionne des monomères à insaturation monoéthylénique, solubles dans l'eau, et de l'eau avec un mélange d'émulsifiants constitué de
(a) 5 à 95% en poids d'un copolymère en bloc ou greffé de formule générale (A-COO)ₘ-B, dans laquelle A est un polymère hydrophobe de masse molaire supérieure 500 g/mole à base de poly(hydroxyacide carboxylique), B est un polymère hydrophile bifonctionnel de masse molaire supérieure à 500 g/mole à base d'un polyoxyde d'alkylène et m vaut au moins 2 et
(b) 5 à 95% en poids d'un autre émulsifiant du type eau dans huile de masse moléculaire inférieure à 1000 g/mole
dans une huile qui est d'origine végétale ou animale pour au moins 50%, les monomères de l'émulsion sont polymérisés en particules dont la taille moyenne est de 0,1 à 20 µm, en présence d'amorceurs générateurs de radicaux et éventuellement de mouillants ayant une valeur de HLB supérieure à 10, ou lesdits mouillants sont éventuellement ajoutés à l'émulsion de polymères du type eau dans huile, après l'achèvement de la polymérisation.

4. Utilisation des émulsions de polymères du type eau dans huile selon la revendication 1 ou 2 en tant que floculant pour le traitement des eaux usées et le drainage des boues de décantation.

5. Utilisation des émulsions de polymères du type eau dans huile selon la revendication 1 ou 2 en tant qu'agent de drainage et de rétention dans la fabrication du papier.
